# EUROPÄISCHE PATENTANMELDUNG

(11) **EP 3 821 865 A1**
(43) Veröffentlichungstag der Anmeldung: **19.05.2021**
(21) Anmeldenummer: 20206673.4
(22) Anmeldetag: 10.11.2020
(51) Int. Cl.: A61G 5/10

(54) **LAUFROLLENSCHWENKARRETIERUNG FÜR ELEKTROROLLSTUHL**

(30) Priorität: 14.11.2019 DE 102019130789
(71) Anmelder: Meyra GmbH, 32689 Kalletal (DE)
(72) Erfinder: Himmelreich, Alexander, 32457 Porta Westfalica (DE)
(74) Vertreter: Wagner, Carsten

(57) **Zusammenfassung**

Elektrorollstuhl 2 aufweisend ein Chassis 4 und ein Fahrwerk 6, das wenigstens zwei elektromotorisch drehantreibbare Antriebsräder 8 und zwei antriebslose Lenkräder 10 aufweist, wobei die Lenkräder 10 jeweils um eine vertikale Schwenkachse 16 schwenkbar an dem Chassis 4 angeordnet sind. Erfindungsgemäß ist jedem Lenkrad 10 eine Arretierungsvorrichtung 18 zur Arretierung des Lenkrades 10 in wenigstens einer Schwenkposition zugeordnet.

## Beschreibung

Die Erfindung betrifft einen Elektrorollstuhl der im Oberbegriff des Anspruchs 1 genannten Art.

Derartige Elektrorollstühle sind allgemein bekannt und dienen bewegungseingeschränkten Personen als Mobilitätshilfsmittel. Die bekannten Elektrorollstühle weisen ein Chassis und ein Fahrwerk auf, das wenigstens zwei elektromotorisch drehantreibbare Antriebsräder und zwei antriebslose Lenkräder aufweist, wobei die Lenkräder jeweils um eine vertikale Schwenkachse schwenkbar an dem Chassis angeordnet sind.

Der Erfindung liegt die Aufgabe zugrunde, einen Elektrorollstuhl der im Oberbegriff des Anspruchs 1 genannten Art anzugeben, bei dem die Betriebssicherheit und der Fahrkomfort verbessert sind.

Diese Aufgabe wird durch die im Anspruch 1 angegebene Erfindung gelöst.

Bei den aus dem Stand der Technik bekannten Rollstühlen können die Lenkräder um 360° um ihre vertikale Schwenkachse verschwenken und richten sich aufgrund ihrer Nachlaufstrecke in Fahrtrichtung aus. Die Nachlaufstrecke ist dabei definiert als Abstand zwischen dem Radaufstandspunkt und dem gedachten Durchstoßpunkt der vertikalen Schwenkachse (Lenkradachse) auf der Radaufstandsebene. Die Nachlaufstrecke richtet sich stets in Fahrtrichtung aus, sodass der Radaufstandspunkt dem Durchstoßpunkt in Fahrtrichtung gesehen nachläuft. Verändert sich die Fahrtrichtung, so ändert sich zwangsläufig auch die Ausrichtung der Nachlaufstrecke, indem der Radaufstandspunkt um die vertikale Schwenkachse gedreht wird. Das durch die Ausrichtung der Nachlaufstrecke erzeugte Rückstellmoment bewirkt insbesondere bei einer Richtungsänderung von der Vorwärts- in die Rückwärtsfahrt ein Ausbrechen der Fahrspur der Lenkräder, sodass das Manövrieren auf engem Raum unkontrollierbar werden kann.

Hiervon ausgehend liegt der Erfindung der Gedanke zugrunde, den Elektrorollstuhl so zu modifizieren, dass ein kontrolliertes Manövrieren auch bei Änderungen der Fahrtrichtung sichergestellt ist. Erfindungsgemäß besteht die Modifikation darin, eine Möglichkeit zur Arretierung der Lenkräder in ihrer jeweiligen Schwenkposition zu schaffen.

In diesem Sinne sieht die Erfindung vor, dass jedem Lenkrad eine Arretierungsvorrichtung zur Arretierung des Lenkrades in wenigstens einer Schwenkposition zugeordnet ist.

Auf diese Weise hat der Benutzer des Rollstuhles die Möglichkeit, die Lenkräder in ihrer Schwenkposition zu arretieren, insbesondere vor einem Wechsel der Fahrtrichtung. Durch die Arretierung ist ein Ausbrechen der Fahrspur der Lenkräder vermieden, sodass unkontrollierte Manövrierzustände des Rollstuhles vermieden sind. Dadurch sind sowohl die Betriebssicherheit des Elektrorollstuhls als auch der Fahrkomfort für den Rollstuhlfahrer erhöht. Dies gilt insbesondere dann, wenn der Rollstuhlfahrer in Bereichen manövriert, in denen der Manövrierraum begrenzt ist oder in dem enge Durchfahrten zu passieren sind, beispielsweise beim Ein- bzw. Ausfahren in einen bzw. aus einem Aufzug.

Zweckmäßigerweise weist die Arretierungsvorrichtung ein Arretierungselement auf, das zwischen einer Arretierungsposition, in der das Lenkrad in einer Schwenkposition arretiert ist, und einer Freigabeposition beweglich ist, in der das Lenkrad um die Schwenkachse schwenkbar ist, wie dies eine vorteilhafte Weiterbildung der Erfindung vorsieht.

Dabei ist dem Arretierungselement zweckmäßigerweise eine Antriebseinrichtung zugeordnet, mittels derer das Arretierungselement zwischen seiner Arretierungsposition und seiner Freigabeposition beweglich ist, wie dies eine andere zweckmäßige Weiterbildung der Erfindung vorsieht.

Die Antriebseinrichtung kann bei der vorgenannten Ausführungsform entsprechend einem beliebigen geeigneten Funktionsprinzip aufgebaut sein. Eine vorteilhafte Weiterbildung der Erfindung sieht insoweit vor, dass die Antriebseinrichtung eine elektromechanische Antriebseinrichtung ist. Entsprechende elektromechanische Antriebseinrichtungen stehen in unterschiedlichen Bauformen zur Verfügung und können relativ einfach und kostengünstig aufgebaut sein. Die Speisung elektrischer bzw. elektronischer Komponenten der Antriebseinrichtung kann durch die Fahrbatterie des Elektrorollstuhls oder durch eine separate Batterie bewerkstelligt werden.

Eine vorteilhafte Weiterbildung der vorgenannten Ausführungsform sieht vor, dass die Antriebseinrichtung einen Elektromagneten aufweist. Auf diese Weise ist die Antriebseinrichtung besonders einfach, kostengünstig und funktionssicher ausgestaltet.

Grundsätzlich kann das Arretierungselement mittels der Antriebseinrichtung zwischen seiner Arretierungsposition und seiner Freigabeposition bewegt werden. Eine vorteilhafte Weiterbildung der Erfindung sieht insoweit vor, dass das Arretierungselement durch Federmittel in die Freigabeposition vorgespannt und mittels der Antriebseinrichtung entgegen der Federwirkung der Federmittel in die Arretierungsposition beweglich ist. Auf diese Weise befindet sich das Arretierungselement bei nicht aktivierter Antriebseinrichtung in seiner Freigabeposition.

Zweckmäßigerweise ist eine Steuerungseinrichtung zur Ansteuerung der Antriebseinrichtung vorgesehen, wie dies eine andere zweckmäßige Weiterbildung der Erfindung vorsieht.

Die Betätigung der Steuerungseinrichtung kann entsprechend den jeweiligen Anforderungen und Gegebenheiten auf beliebige geeignete Weise erfolgen, beispielsweise über einen von dem Rollstuhlfahrer zu betätigenden Handschalter. Eine vorteilhafte Weiterbildung der Erfindung sieht insoweit vor, dass die Steuerungseinrichtung durch einen Benutzer des Rollstuhles berührungslos betätigbar ist. Auf diese Weise kann die Arretierung eingeschaltet bzw. aufgehoben werden, ohne dass ein Kraftaufwand des Rollstuhlfahrers erforderlich ist.

Bei der vorgenannten Ausführungsform kann die Betätigung der Steuerungseinrichtung zur Ansteuerung der Antriebseinrichtung entsprechend einem beliebigen geeigneten Funktionsprinzip erfolgen, beispielsweise unter Verwendung eines Augensensors oder eines Sensors, der eine vorbestimmte Geste des Rollstuhlfahrers erkennt. Eine vorteilhafte Weiterbildung der Erfindung sieht insoweit vor, dass die Steuerungseinrichtung eine Sprachsteuerungseinrichtung aufweist. Bei dieser Ausführungsform wird die Arretierung über Sprachbefehle gesteuert, was die Bedienung wesentlich vereinfacht. Die Sprachsteuerung kann hard- und softwaremäßig in die Steuerung des Elektrorollstuhls integriert sein. Es ist jedoch auch möglich, für die Spracherkennung hard- und softwaremäßige Ressourcen eines externen Geräts zu nutzen, beispielsweise eines Smartphones, das zur Umsetzung von Sprachbefehlen in Steuerbefehle für die Arretierungsvorrichtung mit der Steuerungseinrichtung des Elektrorollstuhls über eine Schnittstelle, insbesondere eine Funkschnittstelle, verbindbar oder verbunden ist.

Erfindungsgemäß kann die Steuerungseinrichtung auch so ausgebildet und programmiert sein, dass die Arretierungsvorrichtung zum Arretieren des Lenkrades automatisch betätigt wird, wenn die Fahrtrichtung des Elektrorollstuhls umgekehrt wird, und die Arretierung nach einer vorbestimmten Zeitdauer, einer vorbestimmten Fahrtstrecke oder in Abhängigkeit von einem vorbestimmten Fahrzustand des Elektrorollstuhls gelöst wird. Bei dieser Ausführungsform erfolgt die Betätigung der Arretierung teil- oder vollautomatisch. Es sind auch Mischformen oder Kombinationen zwischen einer automatischen und benutzergesteuerten Betätigung der Arretierung möglich.

Eine andere vorteilhafte Weiterbildung der Erfindung sieht vor, dass die Steuerungseinrichtung derart ausgebildet und mit den den Lenkrädern zugeordneten Antriebseinrichtungen wirkungsverbunden ist, dass die Antriebseinrichtungen synchron angesteuert werden zur synchronen Betätigung der Arretierungsvorrichtungen. Auf diese Weise werden die den beiden Lenkrädern zugeordneten Arretierungsvorrichtungen synchron betätigt, die Arretierung der Lenkräder also synchron eingeschaltet bzw. aufgehoben.

Eine andere vorteilhafte Weiterbildung der Erfindung sieht vor, dass das Arretierungselement zwischen seiner Arretierungsposition und seiner Freigabeposition in Axialrichtung der Schwenkachse beweglich gelagert oder dass das Arretierungselement zwischen seiner Arretierungsposition und seiner Freigabeposition in Radialrichtung der Schwenkachse beweglich gelagert ist.

Um den Aufbau der Arretierungsvorrichtung besonders einfach und kostengünstig zu gestalten, sieht eine vorteilhafte Weiterbildung der Erfindung vor, dass die Schwenkachse durch eine drehbar gelagerte Welle definiert ist und dass die Welle und das Arretierungselement formschlüssige Mittel aufweisen, die derart ausgebildet sind und zusammenwirken, dass in der Arretierungsposition des Arretierungselementes die Welle gegen Drehung arretiert und in der Freigabeposition des Arretierungselementes frei drehbar ist. In hierzu äquivalenter und für den Fachmann als gleichwirkend erkennbarer Weise können bei dieser Ausführungsform anstelle der formschlüssigen Mittel auch reibschlüssige Mittel verwendet werden, mittels derer die Welle in ihrer jeweiligen Schwenkposition arretiert wird. Bei dieser Ausführungsform wird der Reibschluss konstruktiv so bemessen, dass die gewünschte Arretierungswirkung erzielt ist.

Eine im Sinne einer einfachen und kostengünstigen Fertigung und eines einfachen Aufbaus mit hoher Funktionssicherheit vorteilhafte Weiterbildung der vorgenannten Ausführungsform sieht vor, ob dass die formschlüssigen Mittel einen an der Welle ausgebildeten Zapfen mit unrundem Querschnitt aufweisen, der in Arretierungsposition des Arretierungselementes in eine komplementär ausgebildete Ausnehmung in dem Arretierungselement eingreift.

Form, Größe und Ausgestaltung des Arretierungselementes sind entsprechend den jeweiligen Anforderungen und Gegebenheiten innerhalb weiter Grenzen wählbar. Eine vorteilhafte Weiterbildung der Erfindung sieht insoweit vor, dass das Arretierungselement scheibenförmig oder scheibenartig ausgebildet ist.

Eine andere vorteilhafte Weiterbildung der Erfindung sieht vor, dass die Arretierungsvorrichtung derart ausgebildet ist, dass die Arretierung bei Betätigung der Arretierungsvorrichtung in jeder Schwenkposition des Lenkrades wirksam wird oder dass die Arretierungsvorrichtung derart ausgebildet ist, dass die Arretierung bei Betätigung der Arretierungsvorrichtung ausschließlich in wenigstens einer vorbestimmten Schwenkposition des Lenkrades wirksam wird, insbesondere in der einer Geradeausfahrt des Elektrorollstuhls entsprechenden Schwenkposition.

Die Erfindung wird nachfolgend anhand eines Ausführungsbeispiels unter Bezugnahme auf die beigefügte Zeichnung näher erläutert. Dabei bilden alle beschriebenen, in der Zeichnung dargestellten und in den Patentansprüchen beanspruchten Merkmale für sich genommen sowie in beliebiger technisch sinnvoller Kombination den Gegenstand der Erfindung, unabhängig von ihrer Zusammenfassung in den Patentansprüchen und deren Rückbezügen sowie unabhängig von ihrer konkreten Beschreibung bzw. Darstellung in der Zeichnung.

Es zeigt:
- Fig. 1: eine schematische Seitenansicht eines Ausführungsbeispiels eines erfindungsgemäßen Elektrorollstuhls,
- Fig. 2: in gleicher Darstellung wie Fig. 1 jedoch in gegenüber Fig. 1 vergrößertem Maßstab eine Einzelheit aus Fig. 1 im Bereich eines Lenkrades,
- Fig. 3: eine Prinzipskizze zur Verdeutlichung der Nachlaufstrecke,
- Fig. 4: eine Prinzipskizze zur Veranschaulichung der Fahrspur eines Lenkrades eines Elektrorollstuhles gemäß dem Stand der Technik bei einer Fahrtrichtungsänderung,
- Fig. 5: einen Axialschnitt durch ein erstes Ausführungsbeispiel einer erfindungsgemäßen Arretierungsvorrichtung des Elektrorollstuhls gemäß Fig. 1 im Bereich einer Lenkgabelachse in der Freigabeposition des Arretierungselementes,
- Fig. 6: einen weiteren Axialschnitt durch das Ausführungsbeispiel gemäß Fig. 5 in der Freigabeposition des Arretierungselementes,
- Fig. 7: in gleicher Darstellung wie Fig. 5 die Arretierungsvorrichtung gemäß Fig. 5 in der Arretierungsposition des Arretierungselementes,
- Fig. 8: einen Radialschnitt durch die Arretierungsvorrichtung gemäß Fig. 5 im Bereich eines Arretierungselements,
- Fig. 9: die Arretierungsvorrichtung gemäß Fig. 5 in einem explosionsdarstellungsartigen Axialschnitt,
- Fig. 10: eine teilweise geschnittene Seitenansicht eines zweiten Ausführungsbeispiels einer erfindungsgemäßen Arretierungsvorrichtung in der Freigabeposition des Arretierungselementes und
- Fig. 11: in gleicher Darstellung wie Fig. 10 die Arretierungsvorrichtung gemäß Fig. 10 in der Arretierungsposition des Arretierungselements.

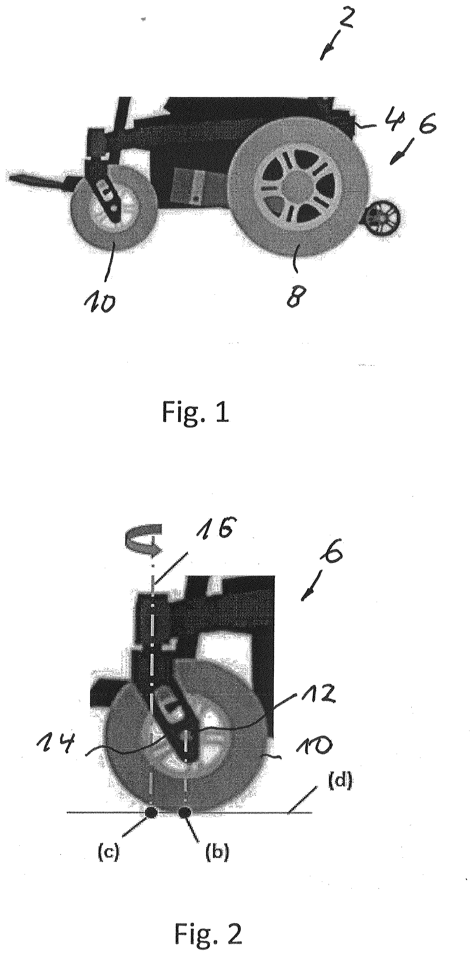

Nachfolgend wird unter Bezugnahme auf Fig. 1 bis Fig. 9 ein erstes Ausführungsbeispiel eines erfindungsgemäßen Elektrorollstuhls beschrieben.

In Fig. 1 ist stark schematisiert in einer Seitenansicht ein Ausführungsbeispiel eines erfindungsgemäßen Elektrorollstuhles 2 dargestellt, der ein Chassis 4 und ein Fahrwerk 6 aufweist. Weitere Bestandteile des Rollstuhles, beispielsweise Sitz und Rückenlehne, auf die sich die Erfindung nicht bezieht, sind aus Gründen der Übersichtlichkeit weggelassen. Der Elektrorollstuhl 2 wird nachfolgend nur insoweit näher erläutert, wie er durch die Erfindung modifiziert ist. Der Aufbau eines Elektrorollstuhls 2 im Übrigen ist dem Fachmann allgemein bekannt und wird daher hier nicht näher erläutert.

Das Fahrwerk 6 weist zwei elektromotorisch drehantreibbare Antriebsräder auf, von denen in der Seitenansicht in Fig. 1 lediglich ein Antriebsrad 8 erkennbar ist. Das Fahrwerk 6 weist ferner zwei antriebslose Lenkräder auf, von denen in der Seitenansicht in Fig. 1 lediglich ein Lenkrad 10 erkennbar ist. Nachfolgend wird lediglich das Lenkrad 10 näher erläutert. Das weitere Lenkrad ist entsprechend aufgebaut.

Das Lenkrad 10 ist um eine horizontale Drehachse 12 drehbar in einer Lenkgabel 14 gelagert. Die Lenkgabel 14 ist um eine vertikale Schwenkachse 16 schwenkbar mit dem Chassis 4 des Elektrorollstuhls 2 verbunden.

Nachfolgend wird zunächst das der Erfindung zugrunde liegende Problem anhand der Figuren 2 bis 4 näher erläutert.

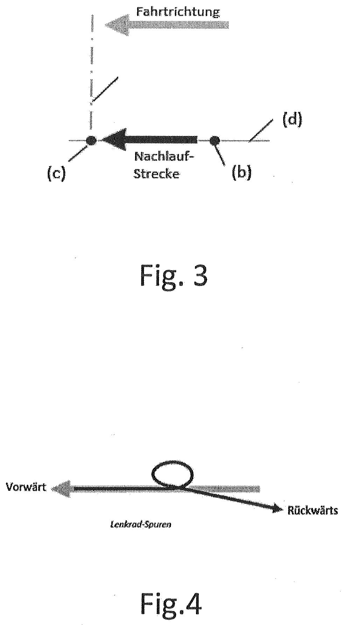

Das Lenkrad 10 kann um 360° um die vertikale Schwenkachse 16 verschwenken und richtet sich aufgrund seiner Nachlaufstrecke in Fahrtrichtung aus. Die Nachlaufstrecke ist dabei definiert als Abstand zwischen dem Radaufstandspunkt (b) (vgl. Fig. 2 und Fig. 3) und dem gedachten Durchstoßpunkt (c) der vertikalen Schwenkachse 16 (Lenkradachse) auf der Radaufstandsebene (d) (vgl. Fig. 2 und Fig. 3). Die Nachlaufstrecke richtet sich stets in Fahrtrichtung aus, sodass der Radaufstandspunkt (b) dem Durchstoßpunkt (c) in Fahrtrichtung gesehen nachläuft. Verändert sich die Fahrtrichtung, so ändert sich zwangsläufig auch die Ausrichtung der Nachlaufstrecke, indem der Radaufstandspunkt (b) um die vertikale Schwenkachse 16 verschwenkt bzw. gedreht wird. Das durch die Ausrichtung der Nachlaufstrecke erzeugte Rückstellmoment bewirkt insbesondere bei einer Richtungsänderung von der Vorwärts- in die Rückwärtsfahrt ein Ausbrechen der Fahrspur der Lenkräder, sodass das Manövrieren auf engem Raum unkontrollierbar werden kann (vgl. Fig. 4).

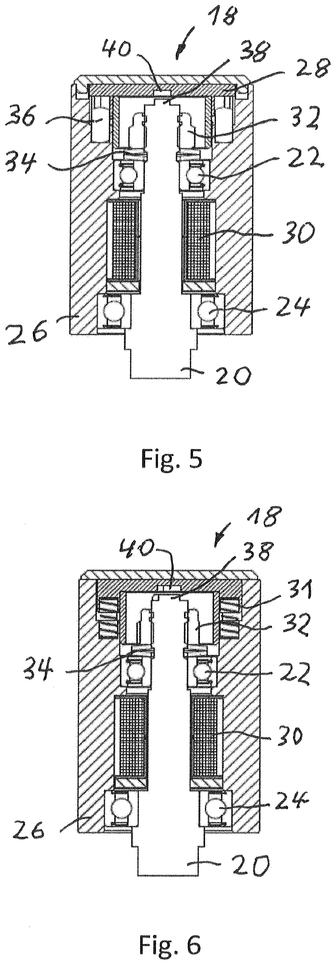

Um dem vorzubeugen, ist erfindungsgemäß jedem Lenkrad 10 eine Arretierungsvorrichtung 18 (vgl. Fig. 5) zur Arretierung des Lenkrades 10 in seiner jeweiligen Schwenkposition zugeordnet.

Das bei dem Elektrorollstuhl 2 gemäß Fig. 1 verwendete erste Ausführungsbeispiel einer Arretierungsvorrichtung 18 wird nachfolgend unter Bezugnahme auf Fig. 5 bis 9 näher erläutert.

Die Schwenkachse 16 ist durch eine Lenkgabelwelle 20 definiert, die über Kugellager 22, 24 in einer Steuerkopfaufnahme 26 schwenkbar gelagert ist.

Die Arretierungsvorrichtung 18 weist ein bei diesem Ausführungsbeispiel scheibenartiges Arretierungselement 28 auf, das in Axialrichtung der Lenkgabelwelle 20 zwischen einer Arretierungsposition, in der das Lenkrad 10 in seiner Schwenkposition arretiert ist, und einer Freigabeposition beweglich ist, in der das Lenkrad um die Schwenkachse frei schwenkbar ist. Fig. 5 zeigt das Arretierungselement 28 in seiner Freigabeposition.

Dem Arretierungselement 28 ist eine Antriebseinrichtung zugeordnet, mittels derer das Arretierungselement zwischen seiner Arretierungsposition und seiner Freigabeposition beweglich ist. Bei dem dargestellten Ausführungsbeispiel ist die Antriebseinrichtung eine elektromechanische Antriebseinrichtung, die einen Elektromagneten 30 aufweist. Der Elektromagnet 30 ist in die Steuerkopfaufnahme 26 integriert und bildet zusammen mit der Lenkgabelwelle 20 einen magnetischen Kreis.

Das Arretierungselement 28 ist relativ zu der Schwenkachse 16 verdrehsicher angeordnet, durch Federmittel 31 in die in Fig. 5 dargestellte Freigabeposition vorgespannt und mittels des Elektromagneten 30 entgegen der Federwirkung der Federmittel 31 in die Arretierungsposition beweglich.

Zur axialen Sicherung der Lenkgabelwelle 20 ist eine Sechskantmutter 32 vorgesehen, die mit Tellerfedern 34 zusammenwirkt.

Das Arretierungselement 28 ist über Zylinderstifte 36 mit der Steuerkopfaufnahme 26 verbunden.

Zur Ansteuerung des Elektromagneten 30 ist eine Steuerungseinrichtung vorgesehen, die von einem Rollstuhlfahrer, der den Elektrorollstuhl 2 benutzt, zum Betätigen oder Lösen der Arretierung betätigbar ist. Die Steuerungseinrichtung kann beispielsweise als Handschalter oder als Sprachsteuerungseinrichtung ausgebildet sein. Der grundsätzliche Aufbau einer entsprechenden Steuerungseinrichtung ist dem Fachmann allgemein bekannt und wird daher hier nicht näher erläutert. Aus Gründen der Vereinfachung ist die Steuerungseinrichtung in der Zeichnung auch nicht mehr dargestellt.

Die Steuerungseinrichtung ist bei dem dargestellten Ausführungsbeispiel derart ausgebildet und mit den den Lenkrädern zugeordneten Elektromagneten wirkungsverbunden, dass die Elektromagneten synchron angesteuert werden zur synchronen Betätigung der den beiden Lenkrädern 10 zugeordneten Arretierungsvorrichtungen. Das Betätigen bzw. Lösen der Arretierung erfolgt also an beiden Lenkrädern 10 synchron.

Bei dem dargestellten Ausführungsbeispiel weisen die Lenkgabelwelle 20 und das Arretierungselement 28 formschlüssige Mittel auf, die derart ausgebildet sind und zusammenwirken, dass in der Arretierungsposition des Arretierungselementes 28 die Lenkgabelwelle 20 gegen Drehung bzw. Schwenken um die Schwenkachse 16 arretiert und in der Freigabeposition des Arretierungselementes 28 um die Schwenkachse 16 frei drehbar bzw. schwenkbar ist. Die formschlüssigen Mittel weisen bei diesem Ausführungsbeispiel einen an der Lenkgabelwelle 20 ausgebildeten Zapfen 38 mit unrundem Querschnitt auf, der in Arretierungsposition des Arretierungselementes 28 in eine komplementär ausgebildete Ausnehmung 40 in dem Arretierungselement 28 eingreift.

Fig. 6 zeigt das Ausführungsbeispiel gemäß Fig. 5 in einem weiteren Axialschnitt, und zwar wiederum in der Freigabeposition des Arretierungselementes 28, jedoch in einer gegenüber Fig. 5 um 90° gedrehten Schnittebene.

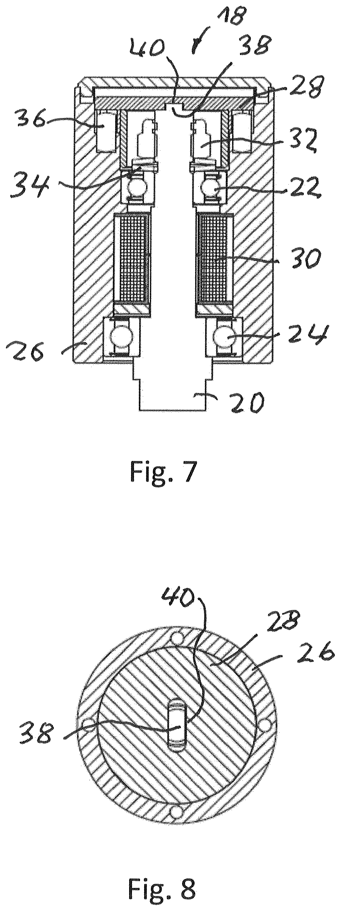

Fig. 7 zeigt das Ausführungsbeispiel gemäß Fig. 5 in einem weiteren Axialschnitt, und zwar in der Arretierungsposition des Arretierungselementes 28.

In Fig. 8, die einen Radialschnitt im Bereich des Arretierungselements 28 zeigt, ist erkennbar, dass die Ausnehmung 40 einen unrunden Querschnitt aufweist, wobei in der Arretierungsposition der zu der Ausnehmung 40 komplementär geformte Zapfen 38 in die Ausnehmung 40 eingreift, sodass in der Arretierungsposition ein Formschluss zwischen dem Arretierungselement 28 und dem Zapfen 38 hergestellt ist. Damit ist in der Arretierungsposition des Arretierungselements 28 eine drehfeste Verbindung zwischen der Lenkgabelwelle 20 und der Steuerkopfaufnahme 26 hergestellt, sodass die Lenkgabelwelle 20 und damit das Lenkrad 20 in der gewünschten Weise in ihrer bzw. seiner Schwenkposition, die bei dem dargestellten Ausführungsbeispiel der Geradeausfahrt des Elektrorollstuhls entspricht, arretiert und damit gegen Verschwenken gesichert ist.

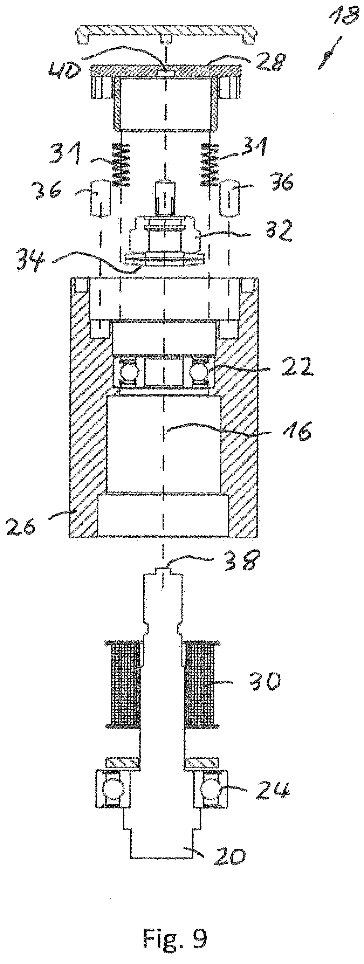

Fig. 9 zeigt das Ausführungsbeispiel der Arretierungsvorrichtung gemäß Fig. 5 in einem explosionsdarstellungsartigen Axialschnitt.

Die Funktionsweise der Erfindung ist wie folgt:
Falls der Rollstuhlfahrer die Fahrtrichtung des Elektrorollstuhls 2 umkehren möchte, aktiviert er durch Betätigung der Steuerungseinrichtung die Arretierung. Hierbei zieht der Elektromagnet 30 an, sodass das Arretierungselement 28 in Axialrichtung der Schwenkachse 16 auf die Lenkgabelwelle 20 zu, also in Fig. 5 nach unten bewegt wird. Hierbei gelangt der Zapfen 38 in Eingriff mit der Ausnehmung 40, sodass das Lenkrad 10 in seiner Schwenkposition arretiert und die Lenkgabelwelle 20 und damit das Lenkrad 10 gegen Verschwenken gesichert ist. In der arretierten Position der Lenkräder des Elektrorollstuhles 2 kann der Rollstuhlfahrer die Fahrtrichtung umkehren, ohne dass die Fahrspur der Lenkräder 10 ausbricht. Auch bei einer Umkehrung der Fahrtrichtung kann der Rollstuhlfahrer damit kontrolliert manövrieren.

Auf diese Weise sind sowohl die Betriebssicherheit des Elektrorollstuhles als auch der Komfort für den Rollstuhlfahrer verbessert.

Zum Lösen der Arretierung wird der Elektromagnet 30 deaktiviert, sodass das Arretierungselement 28 unter der Federwirkung der Federmittel 31 aus seiner in Fig. 7 dargestellten Arretierungsposition zurück in die in Fig. 5 dargestellte Freigabeposition bewegt wird.

Es ist ersichtlich, dass bei dem dargestellten Ausführungsbeispiel die Arretierungsvorrichtung 18 derart ausgebildet ist, dass die Arretierung bei Betätigung der Arretierungsvorrichtung ausschließlich in wenigstens einer vorbestimmten Schwenkposition des Lenkrades 10 wirksam wird, und zwar einer Schwenkposition, die einer Geradeausfahrt des Elektrorollstuhls 2 entspricht. Es ist erfindungsgemäß jedoch grundsätzlich auch möglich, die Arretierungsvorrichtung 18 so auszubilden, dass eine Arretierung in jeder Schwenkposition des Lenkrades 10 erfolgen kann.

Sofern bei dem Ausführungsbeispiel gemäß den Figuren 5 bis 9 die Arretierungsvorrichtung 18 in einer Schwenkposition des Lenkrades 10 betätigt wird, die nicht der Geradeausfahrt entspricht, so findet zunächst ein Formschluss zwischen der Ausnehmung 40 und dem Zapfen 38 nicht statt, sodass die Arretierung zunächst nicht aktiviert ist. Wird in dieser Position des Arretierungselements 28 das Lenkrad 10 verschwenkt, so rastet der Zapfen 38 in die Ausnehmung 40 ein, sobald diejenige Schwenkposition erreicht ist, die einer Geradeausfahrt entspricht. Die Arretierung ist dann aktiviert.

Es ist ersichtlich, dass bei dem dargestellten ersten Ausführungsbeispiel die Arretierung durch bezogen auf die Schwenkachse 16 bzw. Lenkgabelwelle 20 axiale Bewegung des Arretierungselements 28 erfolgt, indem das Arretierungselement in Axialrichtung der Schwenkachse 16 beweglich gelagert ist.

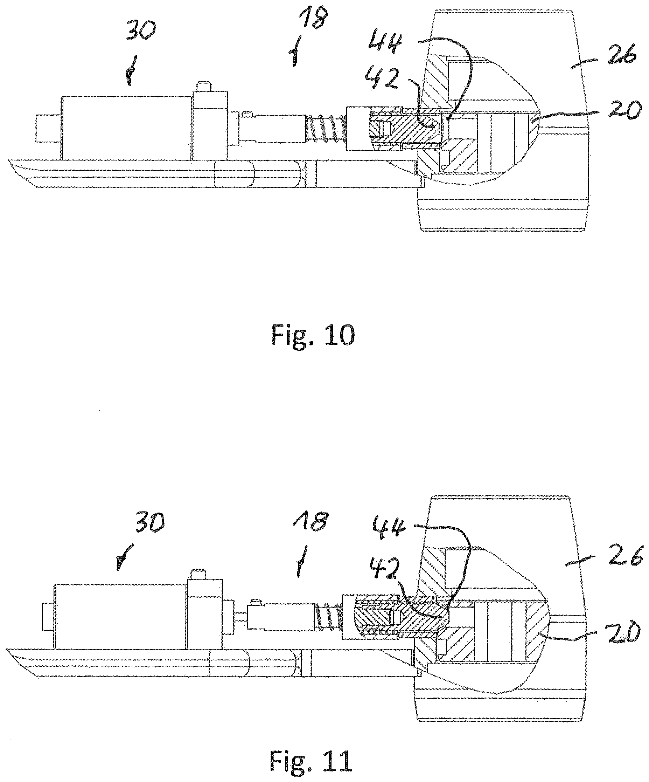

Fig. 10 zeigt in einer teilweise geschnittenen Seitenansicht ein zweites Ausführungsbeispiel einer erfindungsgemäßen Arretierungsvorrichtung, das sich von dem ersten Ausführungsbeispiel dadurch unterscheidet, dass das Arretierungselement in Radialrichtung der Schwenkachse 16, die der Radialrichtung der Lenkgabelwelle 20 entspricht, beweglich gelagert ist.

Aus Fig. 10 ist ersichtlich, dass bei dem zweiten Ausführungsbeispiel das Arretierungselement durch einen Arretierungszapfen 42 gebildet ist, der mittels des Elektromagneten 30 zwischen der in Fig. 10 dargestellten Freigabeposition und der in Fig. 11 dargestellten Arretierungsposition beweglich ist. In der Arretierungsposition greift der Arretierungszapfen 42 in eine an der radialen Außenfläche der Lenkgabelwelle 20 gebildete Arretierungsausnehmung 44 ein, sodass die Lenkgabelwelle 20 und damit das zugeordnete Lenkrad 10 gegen Verschwenken um die Schwenkachse 16 gesichert ist.

## Patentansprüche

1. Elektrorollstuhl (2),
mit einem Chassis (4) und
mit einem Fahrwerk (6), das wenigstens zwei elektromotorisch drehantreibbare Antriebsräder (8) und zwei antriebslose Lenkräder (10) aufweist,
wobei die Lenkräder (10) jeweils um eine vertikale Schwenkachse (16) schwenkbar an dem Chassis (4) angeordnet sind,
**dadurch gekennzeichnet,**
**dass** jedem Lenkrad (10) eine Arretierungsvorrichtung (18) zur Arretierung des Lenkrades (10) in wenigstens einer Schwenkposition zugeordnet ist.

2. Elektrorollstuhl nach Anspruch 1, **dadurch gekennzeichnet, dass** die Arretierungsvorrichtung (18) ein Arretierungselement (28) aufweist, das zwischen einer Arretierungsposition, in der das Lenkrad (10) in seiner Schwenkposition arretiert ist, und einer Freigabeposition beweglich ist, in der das Lenkrad (10) um die Schwenkachse (16) schwenkbar ist.

3. Elektrorollstuhl nach Anspruch 2, **dadurch gekennzeichnet, dass** dem Arretierungselement (28) eine Antriebseinrichtung zugeordnet ist, mittels derer das Arretierungselement (28) zwischen seiner Arretierungsposition und seiner Freigabeposition beweglich ist.

4. Elektrorollstuhl nach Anspruch 3, **dadurch gekennzeichnet, dass** die Antriebseinrichtung eine elektromechanische Antriebseinrichtung ist.

5. Elektrorollstuhl nach Anspruch 3 oder 4, **dadurch gekennzeichnet, dass** die Antriebseinrichtung einen Elektromagneten (30) aufweist.

6. Elektrorollstuhl nach einem der Ansprüche 3 bis 5, **dadurch gekennzeichnet, dass** das Arretierungselement (28) durch Federmittel in die Freigabeposition vorgespannt und mittels der Antriebseinrichtung entgegen der Federwirkung der Federmittel in die Arretierungsposition beweglich ist.

7. Elektrorollstuhl nach einem der Ansprüche 3 bis 6, **gekennzeichnet durch** eine Steuerungseinrichtung zur Ansteuerung der Antriebseinrichtung.

8. Elektrorollstuhl nach Anspruch 7, **dadurch gekennzeichnet, dass** die Steuerungseinrichtung derart ausgebildet ist, dass die Antriebseinrichtung durch einen Benutzer des Rollstuhles berührungslos betätigbar ist.

9. Elektrorollstuhl nach Anspruch 7 oder 8, **dadurch gekennzeichnet, dass** die Steuerungseinrichtung eine Sprachsteuerungseinrichtung aufweist.

10. Elektrorollstuhl nach einem der Ansprüche 7 bis 9, **dadurch gekennzeichnet, dass** die Steuerungseinrichtung derart ausgebildet und mit den den Lenkrädern (10) zugeordneten Antriebseinrichtungen wirkungsverbunden ist, dass die Antriebseinrichtungen synchron angesteuert werden zur synchronen Betätigung der Arretierungsvorrichtungen (18).

11. Elektrorollstuhl nach einem der Ansprüche 2 bis 10, **dadurch gekennzeichnet, dass** das Arretierungselement (28) in Axialrichtung der Schwenkachse (16) zwischen seiner Arretierungsposition und seiner Freigabeposition beweglich gelagert ist oder dass das Arretierungselement (28) in Radialrichtung der Schwenkachse (16) zwischen seiner Arretierungsposition und seiner Freigabeposition beweglich gelagert ist.

12. Elektrorollstuhl nach einem der Ansprüche 2 bis 10, **dadurch gekennzeichnet, dass** die Schwenkachse (16) durch eine drehbar gelagerte Welle (20) definiert ist und dass die Welle (20) und das Arretierungselement (28) formschlüssige Mittel aufweisen, die derart ausgebildet sind und zusammenwirken, dass in der Arretierungsposition des Arretierungselementes die Welle gegen Drehung bzw. Schwenken um die Schwenkachse (16) arretiert und in der Freigabeposition des Arretierungselementes um die Schwenkachse (16) frei drehbar bzw. schwenkbar ist.

13. Elektrorollstuhl nach Anspruch 12, **dadurch gekennzeichnet, dass** die formschlüssigen Mittel einen an der Welle (20) ausgebildeten Zapfen (38) mit unrundem Querschnitt aufweisen, der in Arretierungsposition des Arretierungselementes (28) in eine komplementär ausgebildete Ausnehmung (40) in dem Arretierungselement (28) eingreift.

14. Elektrorollstuhl nach einem der Ansprüche 2 bis 13, **dadurch gekennzeichnet, dass** das Arretierungselement (28) scheibenförmig oder scheibenartig ausgebildet ist.

15. Elektrorollstuhl nach einem der vorhergehenden Ansprüche, **dadurch gekennzeichnet, dass** die Arretierungsvorrichtung (18) derart ausgebildet ist, dass die Arretierung bei Betätigung der Arretierungsvorrichtung (18) in jeder Schwenkposition des Lenkrades wirksam wird oder dass die Arretierungsvorrichtung (18) derart ausgebildet ist, dass die Arretierung bei Betätigung der Arretierungsvorrichtung (18) ausschließlich in wenigstens einer vorbestimmten Schwenkposition des Lenkrades (10) wirksam wird, insbesondere der einer Geradeausfahrt des Elektrorollstuhls (2) entsprechenden Schwenkposition des Lenkrades 10.
